# EUROPEAN PATENT APPLICATION

(11) **EP 2 087 964 A2**
(43) Date of publication of application: **12.08.2009**
(21) Application number: 09425045.3
(22) Date of filing: 10.02.2009
(51) Int. Cl.: B23Q 1/03, B25B 11/00

(54) **Swinging suction cup, in particular for worktables of machine tools**

(30) Priority: 11.02.2008 IT BS20080028
(71) Applicant: C.M.S. S.p.A., 24019 Zogno (Bergamo) (IT)
(72) Inventor: Pesenti, Gino, 24019 Zogno - Bergamo (IT)
(74) Representative: Sangiacomo, Fulvia

(57) **Abstract**

The invention concerns pneumatic equipment to support and block elements to be machined on a worktable of machine tools. It comprises a number of suction cups (13) mounted on the worktable (11), connected to an aspiration group, movable and able to be positioned in height above the worktable, characterized in the fact that each suction cup (13) is attached to a cap support (23), connected to a spherical head (21) and movable in all directions between a horizontal and a sloping position with regard to a vertical axis (X), and in the fact that the cap (23) is associated with an additional control device (17) to establish and define the horizontal position of the suction cup and a means of pulling (27) to vary the position of the suction cup, starting from said horizontal position, in reply to the application of an external force.

## Description

### Field of the Invention

This invention concerns in general a device for the support and retention of elements to be machined on the worktables of machine tools, and refers, in particular, to a suction cup which can be oriented and is useable in plurality with others, to form a rest top with a variable configuration depending on the shape of the elements to be supported and blocked while being machined by numerical controlled machine tools.

### State of the Technique

In some machine tools, the worktable is provided with a number of retentions in the form of suction cups connected to a suction group, and from time to time, the item to be machined is supported and retained by said suction cups. The items to be machined can be made of a composite material, wood, glass, marble or the like and even of considerable size.

As long as the item to be machined is flat, there are no problems placing the item on the table. The suction cups in this case are positioned coplanar and activated in number and positioned depending on the dimensions and shape of the item.

For some constructions however, curved elements or items, not flat however, are needed which have to be cutout, profiled and mechanically machined using several axes machine tools. This calls for the need to have suitable systems to support and block, on a worktable, not only flat items but also curved ones, according to needs, taking into consideration also the variety of shapes and dimensions that the curved items to be blocked might have from time to time. In this regard, it has already been proposed to equip a worktable with suction cups of the type that can be adjusted in height and manually or mechanically oriented with regard to their vertical position, but however not able to meet in full the needs of the sector.

### Objects and Summary of the Invention

One object of this invention is to meet efficiently the above mentioned problems and to provide correspondingly a vacuum retention system, that is with suction cups, to be used on machine tool worktables, varyingly oriented to define each time a work and blocking top for any element or item to be supported, not only flat, but also with any uniform or variable curvature.

Another object of the invention is to propose a fixture for the above mentioned use, which can be defined as universal, which can easily be adapted to meet the curved shapes of each element or item and the different dimensions that may exist from item to item of a same model.

These objects and evident advantages deriving from them are achieved, according to the invention, with a fixture to support and block elements to be machined using machine tools, comprising a number of suction cups assembled on a worktable, connected to a suction group, movable and variable in height, where each suction cup is attached to a support cover, connected to a spherical head and movable in all directions between a horizontal and a sloping position with regard to a vertical axis, and where a control device to establish and define the horizontal position of the cover movable in all directions between a horizontal and a sloping position with regard to the vertical axis, and where the cover is associated with a control device to establish and define the horizontal position of the suction cup and a pulling device to vary the tilt of the suction cup in reply to the application of a force from outside.

In other words, the suction cups positioned on a worktable are each supported by a ball-and-socket joint positioned at the top of the stem of a cylinder placed vertically designed to vary and stabilize the position in height and are individually oriented in all directions so as to form together, a face corresponding to the shape of the item to be supported and to block in the machine.

### Brief Description of the Drawings

The invention will moreover be described in greater detail making reference to the indicative and not limiting drawings, in which:
Fig. 1 is a view in perspective of a worktable with only a few suction cups;
Fig. 2 is a cross section of the worktable in Fig.1 level with the suction cups represented;
Fig. 3 is a view in perspective of a suction cup with relative actuator;
Fig, 4 shows a longitudinal section of the whole in Fig. 3;
Fig. 5 shows an enlarged portion of the whole in Fig.4 with the suction cup in a horizontal position;
Fig. 6 is a similar view to the one in Fig. 5 but with the suction cup tilted with regard to the vertical; and
Fig. 7 is a variation in the construction of the system to define the horizontal position of the suction cup.

### Detailed Description of the Invention

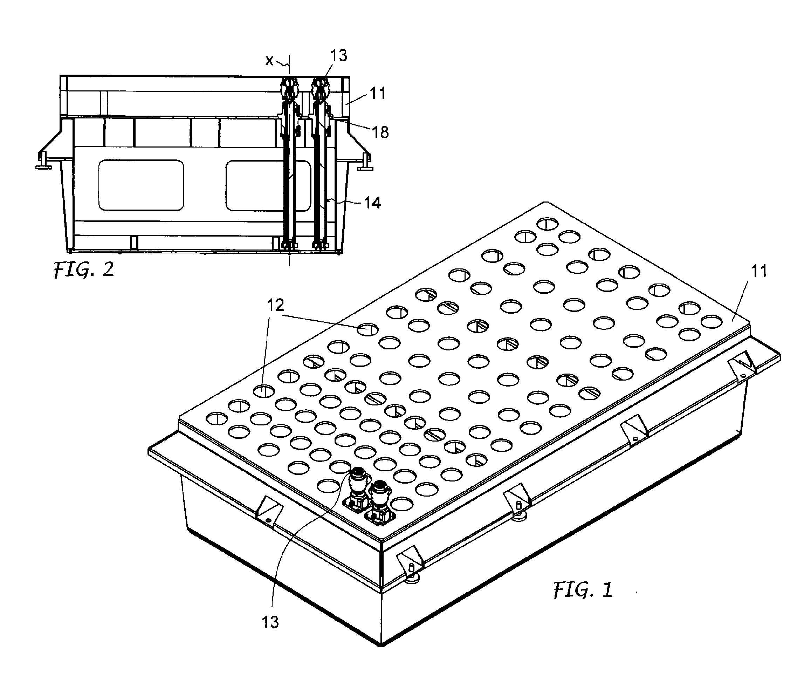

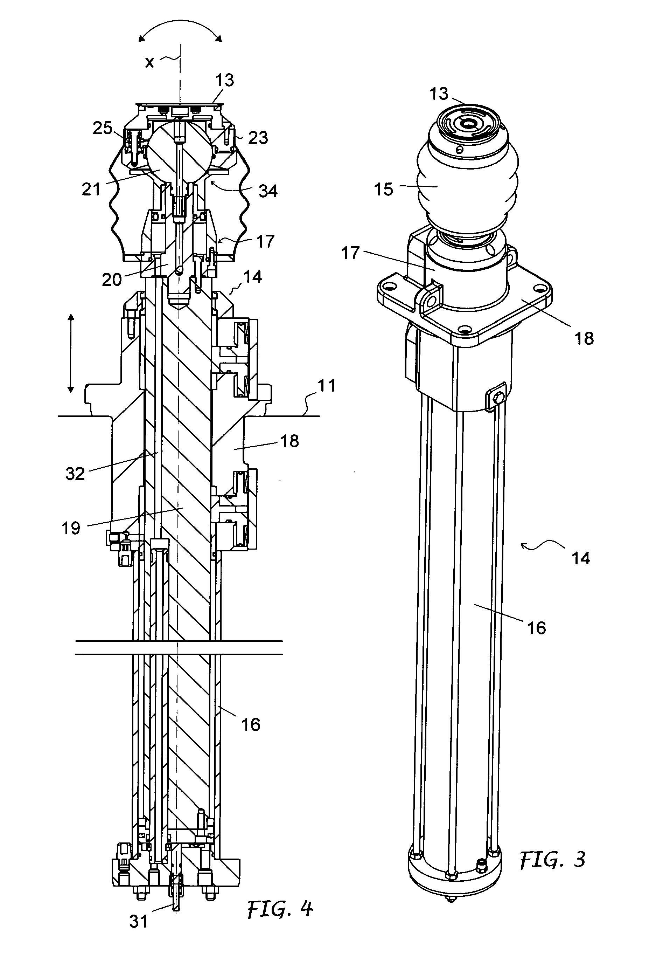

In Figs. 1 and 2 of said drawings is represented, for example, a worktable 11 for tool machines, provided with a number of seats 12 to receive an equivalent number of suction cups 13, destined to pneumatically support and block on the work table every item while it is being machined. Every suction cup is provided with a respective vertical X axis positioning the actuator group 14, as shown in Figs. 3 e 4.

In particular, the suction cup 13 is applied to a ball-and-socket joint 15 positioned at the top of the actuator 14, and this comprises a primary pneumatic cylinder 16 and an additional control device 17 to establish and define the horizontal position of the suction cup.

The primary pneumatic cylinder 16 is fixed to the table by means of a support 18 and has a stem 19 at the top of which is applied the ball-and-socket joint 15 which is inserted in a possible extension 20.

More in detail, the ball-and-socket joint 15 is made up of a spherical head 21 fixed to said extension 20 and by a cap 23 to which the suction cup 13 is fixed. The vacuum to the suction cup 13 each time it is activated is applied through a duct 22 that is connected externally, by means of a connector, to a suction device, not shown, that extends in the spherical head of the articulated joint 21 and which communicates with the suction cup through some holes 22' provided in the upper shell of the cap 23.

In the example illustrated, the cap 23 comprises two complementary shells, one lower 23' and one upper 23", which can be brought together to be blocked on the spherical head 21 and moved apart to enable the orientation of the cap 23, and that of the suction cup 13, with regard to the vertical X axis in all directions starting from its horizontal position.

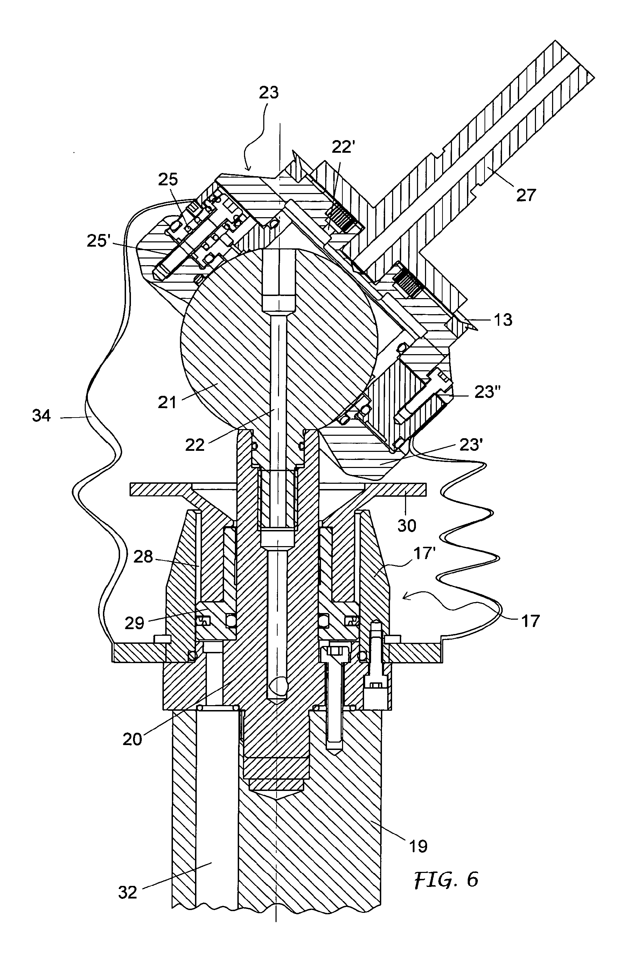

The two shells 23' and 23" are configured between them to define a fluid chamber 24. They are connected and normally kept in the blocked position attached to the spherical head 21 by means of springs 25 guided along the stem of a pin 25'. Their separation to be released from the spherical head 21 is caused by the delivery of air under pressure through a connector duct 26 in said chamber 24 creating a force opposed to that of the springs 25. Only then can the cap be moved and turned with regard to the spherical head for the orientation of the suction cup according to needs. The movement and positioning of the cap 23, consequently of the suction cup 13, can be carried out by applying an external force by means of a pulling device 27 set up to engage with the upper shell of the cap (Fig. 6) and connectable to an dragging device such as a spindle on board the machine or any type of manipulator that can be managed according to a programme set according to the shape of the part to be supported and blocked. It is the same for each of the suction cups 13 on the worktable so that they are positioned differently in height and oriented to define overall a surface that corresponds each time to the shape of the item to be machined.

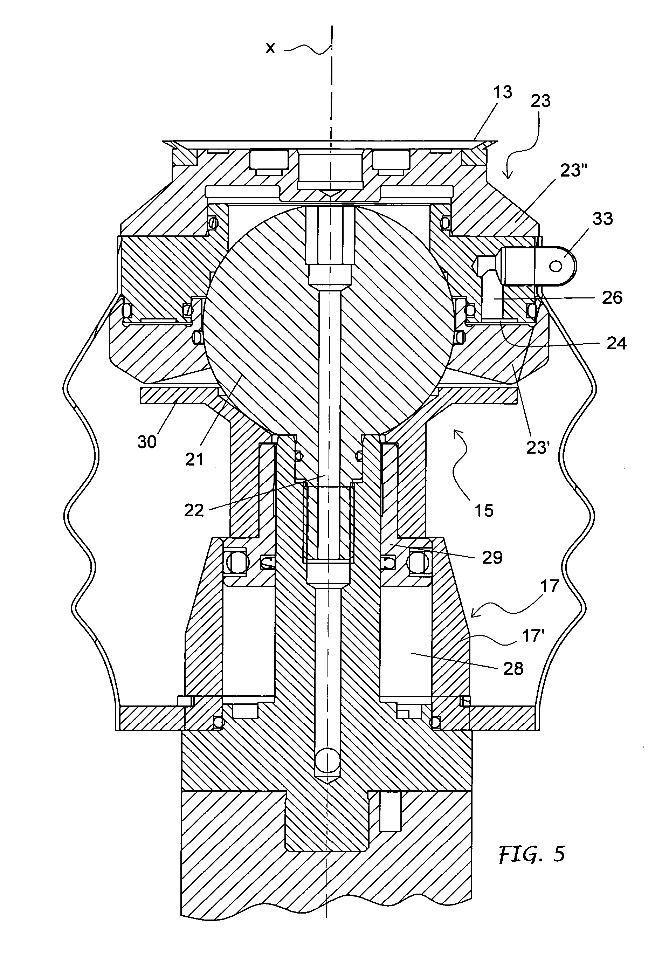

In the execution shape of Figs. 4-6 the additional control device 17 consists in a secondary pneumatic cylinder 17' fixed to the stem 19 of the primary pneumatic cylinder 16 and is on a level with the extension 20. Said pneumatic cylinder 17' therefore follows the movements in height of said stem 19 and forms, with the external surface of the extension 20, an annular chamber 28 in which the piston 29 slides carrying a thrust plate 30 movable in height and designed to insert into the cap, and with it the suction cup, in a horizontal position after each angular orientation.

When the suction cup 13 is oriented with regard to the vertical, the cylinder and the cap are retracted into an inactive position (Fig. 6). To get the suction cup to return to the horizontal position, the piston 29 of the secondary cylinder 17' is activated by feeding air under pressure to the annular chamber 28 so as to move the thrust plate 30 which moves from the bottom towards the top to engage the lowest portion of the lower shell 23' of the cap 23.

The device has also at least one conduit 31 to deliver air to the primary cylinder 16, one conduit 32 to deliver air to the secondary cylinder 17 which can extend in the stem 19 of the main cylinder 16 and an air feed conduit 33 to the chamber 24 provided between the two shells 23', 23".

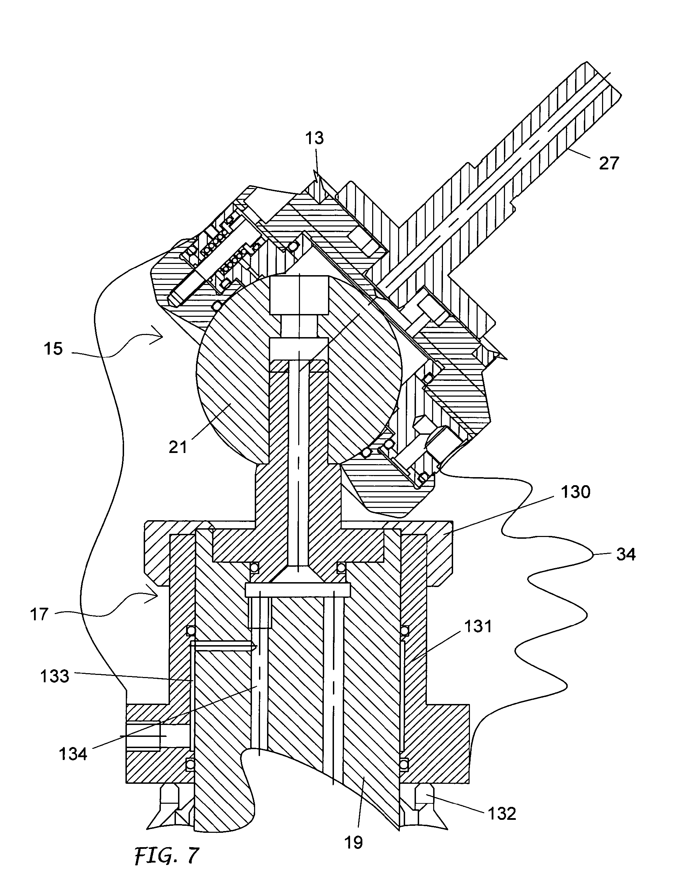

In a variation in the construction as shown in Fig. 7, the additional control device 17 for the return of the suction cup 13 in into the horizontal position after each of its tilts, consists in a thrust plate 130 fixed to a bush 131, facing towards the joint 15. The bush 131 is mounted and slides along the upper part of the stem 19 of the primary pneumatic actuator 14 and is designed to rest with its base on a fixed locator means 132. Between the stem 19 and the bush 131 a chamber or hollow space 133 is provided connected at least to a vent 134. In this case the bush 131, and with it the thrust plate 130, follow the extraction movement of the stem 19 without however interfering with the joint 15 during the positioning in height of the suction cup and its angle.

The horizontal repositioning of the suction cup takes place on the other hand using a re-entry stroke, that is a return of the stem 19 of the primary actuator14 and as soon as the bush 131 rests against the fixed locator 132. So the bush and plate remain stopped at a height, whereas with a further return stroke of the stem, the joint lowers to rest on the thrust plate 130 with the lowest portion of its lower shell I 23', causing it to turn until the horizontal position is restored.

The ball-and-socket joint 15 and the secondary piston 17 can be contained in a protective casing 34 made of a flexible material.

## Claims

1. Pneumatic equipment to support and block elements to be machined on a worktable of machine tools, comprising a plurality of suction cups (13) mounted on the worktable (11), connected to an aspiration group, movable and able to be positioned in height above the worktable, **characterized in that** each suction cup (13) is attached to a cap support (23), connected to a spherical head (21) and movable in all directions between a horizontal and a sloping position with regard to a vertical axis (X), and **in that** the cap (23) is associated with an additional control device (17) to establish and define the horizontal position of the suction cup and a means of pulling (27) to vary the position of the suction cup, starting from said horizontal position, in reply to the application of an external force.

2. Equipment according to claim 1, wherein the cap (23) and the spherical head (21) form a ball-and-socket joint (15) for positioning the suction cup (13), in which said joint (15) is carried by an actuator (14), that comprises a primary pneumatic cylinder (16) for the positioning in height and that it is associated with the additional control device (17) designed to maintain and hold the cap (23) with the suction cup (13) in a horizontal position starting from any sloping position.

3. Equipment according to claims 1 or 2, wherein the cap (23) is made up of two complementary shells, lower (23') and upper (23"), associated with the spherical head (21), so as to define a chamber (24) and be movable between a blocked and a released position with regard to the spherical head.

4. Equipment according to the previous claims, wherein the shells (23', 23") of said cap (23) are stimulated by springs (25) to hold them in the blocked position on the spherical head and they are movable in the released position by means of a fluid delivered to the chamber (24) between said shells (23', 23") in the opposite direction to that of the springs (25).

5. Equipment according to claim 2, wherein the additional control device (17) has a secondary pneumatic cylinder (17') with a piston (29) associated with a thrust plate (30) facing towards and movable in height to engage with the lower shell (23') of the cap (23) to return back and hold the suction cup (13) in a horizontal position.

6. Equipment according to claim 2, wherein the secondary control device (17) consists in a thrust plate (130) attached to a bush (131), facing towards the joint (15) holding the suction cup (13) and having a base designed to rest on a fixed locator means (132), said bush (131) following the axial movements of said stem and being prone to sliding along the top part of the stem(19) of the primary pneumatic actuator (14) when the stem moves back and the bush (131) rests on the fixed locator means (132) so as to cause oscillation of the cap with the suction cup from a tilted to an erect position while the stem retracts for a further length to near said cap to the thrust plate (130).

7. Equipment according to the previous claims, wherein the cap (23) can be connected to a pulling device (27) to position the suction cup (13) with regard to the vertical (X) when the shells (23', 23") are in the released position.

8. Equipment according to any of the previous claims, comprising also fluid delivery means under pressure (31, 32, 33) to the primary cylinder (16), to the secondary cylinder (17) and to the chamber (24) between the two shells of the cap and an aspiration conduit connected on one side to the suction cup and on the other side to a vacuum pump.

9. Equipment according to claim 7, wherein the aspiration conduit (22) in connected to the suction cup (13) is provided in the spherical head (21).
